# EUROPEAN PATENT SPECIFICATION

(11) **EP 1 306 297 B1**
(45) Date of publication and mention of the grant of the patent: **14.12.2005**
(21) Application number: 03001879.0
(22) Date of filing: 28.10.1997
(51) Int. Cl.: B62M 7/00

(54) **Power unit for motor-assisted bicycle**
Hilfsantrieb für Fahrräder
Bicyclette à assistance motorisée

(30) Priority: 16.12.1996 JP 33616996; 16.12.1996 JP 33617096
(43) Date of publication of application: 02.05.2003
(62) Divisional of application: 97118741.4
(73) Proprietor: HONDA GIKEN KOGYO KABUSHIKI KAISHA, Minato-ku, Tokyo (JP)
(72) Inventor: Takahashi, Katsunori, c/o K. K. Honda Gijutsu Ken-, Wako-shi, Saitama (JP); Igarashi, Masashi, c/o K. K. Honda Gijutsu Ken-, Wako-shi, Saitama (JP); Haze, Hirotaka, c/o K. K. Honda Gijutsu Ken-, Wako-shi, Saitama (JP); Shimmura, Hiroyuki, c/o K. K. Honda Gijutsu Ken-, Wako-shi, Saitama (JP)
(74) Representative: Liska, Horst

(56) References cited:
- EP-A- 0 743 238
- EP-A- 0 800 988
- WO-A-96/33906

## Description

The present invention relates to a power unit for a motor-assisted bicycle in which an electrically assisting motor is mounted on a casing supported by a body frame while rotatably supporting a crank shaft having on both ends thereof crank pedals.

The present invention relates also to a power unit for a motor-assisted bicycle including a casing supported by a body frame while rotatably supporting a crank shaft having on both ends thereof crank pedals; a power transmitting member enabling transmission of a rotational power from the crank-shaft, the member being rotatably supported on the casing and interlocked with a rear wheel; an electrically assisting motor having a rotational axial line parallel to the crank shaft and mounted in the casing; and a reduction gear train provided between the motor and the power transmitting member.

The power unit of this type has been known, for example, from Japanese Patent Laid-open No. Hei 8-216968.

The related art power unit, however, has a problem that since an electrically assisting motor is entirely covered with a casing for sealing it, the casing is increased in size and weight.

Further, in the prior art power unit, since an electrically assisting motor is mounted in a casing with its rotational axial line extending substantially in parallel to the ground, it is difficult to provide a drain hole serving as a breather hole in a housing of the motor because the drain structure is complicated. For this reason, an electrically assisting motor of the above-described prior art power unit is not provided with a drain structure, and it is mounted in the casing in an enclosed state for water-proofing. However, when the motor is in the enclosed state, air in the housing of the motor is repeatedly expanded/contracted by repeating of heat generation when the motor is in use and cooling when the motor is not in use. Consequently, to prevent permeation of water by the increased/reduced pressure in the housing due to expansion/contraction of the air, the structure of a seal portion between the housing of the motor and the casing is complicated and an expensive seal member having a high sealing performance must be used.

In EP 800 988 a breather hole is provided on upper portion of casing. Accordingly, the water is easy to invade into the power unit through said breather hole provided on the upper surface of the unit.

In view of the foregoing, a further invention has been made, and an object of the further invention is to provide a power unit for a motor-assisted bicycle, which is capable of simplifying a seal structure between a housing of an electrically assisting motor and a casing.

To achieve the above object, according to an invention described in claim 1, there is provided a power unit for a motor-assisted bicycle including: a casing adapted to be supported by a body frame while rotatably supporting a crank shaft having at both ends thereof crank pedals; a power transmitting member enabling transmission of a rotational power from the crank shaft, the member being rotatably supported by the casing and adapted to be interlocked with a rear wheel; an electrically assisting motor having a rotational axial line parallel to the crank shaft and mounted in the casing; and a reduction gear train provided between the motor and the power transmitting member; wherein a breather chamber communicated to the interior of the motor is formed in an upper portion of the casing, and a breather hole communicating the interior of the breather chamber to the exterior is formed in the casing.

With the configuration of the invention described in claim 1, air in the housing of the motor can be breathed through the breather chamber and the breather hole correspondingly to expansion/contraction of the air due to repeating of heat generation when the motor is in use and cooling when the motor is not in use, so that the pressure in the interior of the housing of the motor is not increased or reduced. As a result, it is possible to simplify the seal structure between the housing of the motor and the casing.

Here, a breather pipe is provided on site of power transmission member. The transmission member is usually covered with cover like as chain cover. Accordingly, it is able to prevent permeation of water into the power unit through the breather hole effectively.

According to an invention described in claim 2, in addition to the configuration of the invention described in claim 1, the breather chamber is formed in the upper portion of the casing between the crank shaft and the motor, so that the breather chamber can be located at a relatively high position from the ground. This prevents permeation of water in the breather chamber as much as possible.

According to an invention described in claim 4, in addition to the configuration of the invention described in claim 2, idle shafts, as components of the reduction gear train, having an axial line parallel to the crank shaft are rotatably supported by the casing at positions lower than a straight line connecting an axial line of the crank shaft to a rotational axial line of the motor, and accordingly, the reduction gear train can be configured in such a manner that the motor is close to the crank shaft, and also the breather chamber can be formed by effectively utilizing a space between the crank shaft and the motor. Thus, it is possible to make compact the power unit.

According to an invention described in claim 4, in addition to the configuration of the invention described in any one claim 1 to 3, a through-hole communicating an upper portion of the breather chamber to the interior of the motor and the breather hole communicating a lower portion of the breather chamber to the exterior are formed in the casing. Thus, it is possible to prevent permeation of water from the breather chamber into the casing and the motor, and to positively discharge the water having permeated in the breather chamber.

According to the invention of claim 5, it is able to prevent permeation of water into the power unit through the breather hole more effectively.

Hereinafter, one embodiment of the present invention will be described with reference to the accompanying drawings.
Fig. 1 is a side view of a motor-driven bicycle,
Fig. 2 is a vertical side view of a power unit,
Fig. 3 is a sectional view taken on line 3-3 of Fig. 2,
Fig. 4 is a side view seen in the direction shown by arrow 4 of Fig. 3, with a drive sprocket omitted,
Fig. 5 is a sectional view taken on line 5-5 of Fig. 4,
Fig. 6 is an enlarged view of a portion near a crank shaft shown in Fig. 3,
Fig. 7 is a sectional view taken on line 7-7 of Fig. 6,
Fig. 8 is a sectional view taken on line 8-8 of Fig. 6,
Fig. 9 is a view seen along line 9-9 of Fig. 6 showing a state in which a slider inner is engaged with an inner ring of a clutch,
Fig. 10 is an enlarged sectional view of a portion near an electrically assisting motor shown in Fig. 3,
Fig. 11 is an enlarged sectional view taken on line 11-11 of Fig. 4,
Fig. 12 is an enlarged sectional view taken on line 12-12 of Fig. 10,
Fig. 13 is a front view of a boss.
Fig. 14 is a front view of a ring body,
Fig. 15 is a front view of a reinforcing plate,
Fig. 16 is an exploded view in perspective of a cover, and
Fig. 17 is a sectional view showing a modification of a seal structure of a housing of a electrically assisting motor.

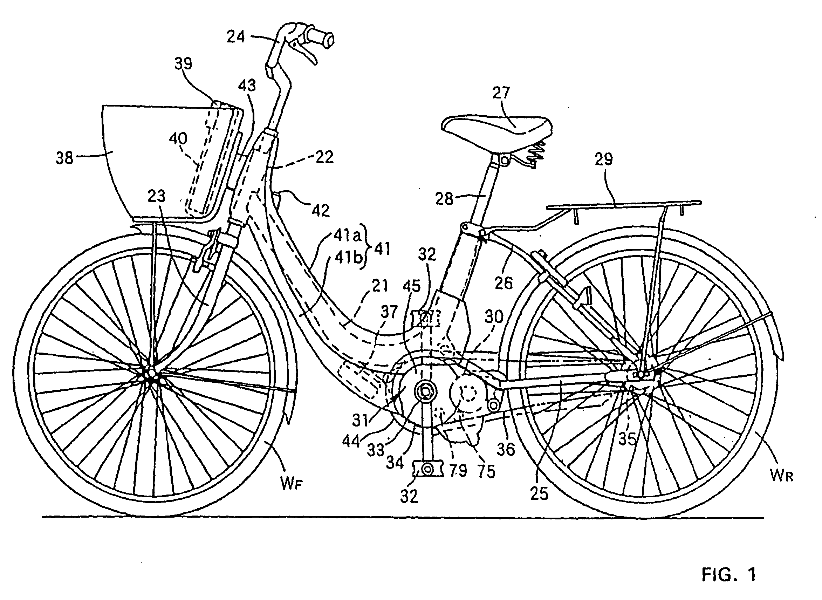

Referring first to Fig. 1, there is shown a motor-assisted bicycle of the present invention, which includes a body frame 21 formed in an approximately U-shape in a side view. A front fork 23 is operably supported on a head pipe 22 provided at a front end of the body frame 21. A front wheel W_{F} is rotatably supported on forked ends of the front fork 23. A handlebar 24 is provided on an upper end of the front fork 23. A power unit 31 having an electrically assisting motor 30 is provided on a lower portion of the body frame 21. A pair of right and left rear forked portions 25 extend rearward, downward from the body frame 21 in a space over a rear portion of the power unit 31 and further extend substantially in the horizontal direction in a space behind the power unit 31. A rear wheel W_{R} is rotatably supported between the rear fork portions 25. A pair of right and left stays 26 are provided between both the rear forked portions 25 and the rear portion of the body frame 21. A seat post 28 having at an upper end thereof a seat 27 is mounted to the rear portion of the body frame 21, with upper and lower positions of the seat 27 being adjustable. A carrier 29 is fixedly disposed behind the seat 27.

A crank shaft 33 having at both ends thereof crank pedals 32 is rotatably supported on a casing 45 of the power unit 31. An endless chain 36 is wound around a drive sprocket 34 and a driven sprocket 35 in a state being covered with a chain case 44. The drive sprocket 34 receives not only a power from the crank shaft 33 but also an assist force from the motor 30. The driven sprocket 35 is provided on an axle of the rear wheel W_{R}.

The operation of the motor 30 is controlled by a controller 37 which is fixedly supported on a lower portion of the body frame 21 on the front side of the power unit 31. The controller 37 controls operation of the motor 30 on the basis of the rotational speed of the motor 30 and an input torque of the input pedals 32.

A front basket 38 is mounted on the head pipe 22 through a bracket 43. A battery containing case 39 disposed on a back surface portion of the front basket 38 is also mounted on the bracket 43. A battery 40 for supplying a power to the motor 30 is insertably/removably contained in the battery containing case 39.

Most of the body frame 21 is covered with a cover 41, and a main switch 42 is disposed on an upper portion of the cover 41. The main switch 42 is operated to supply a power from the battery 40 to the controller 37 and the motor 30.

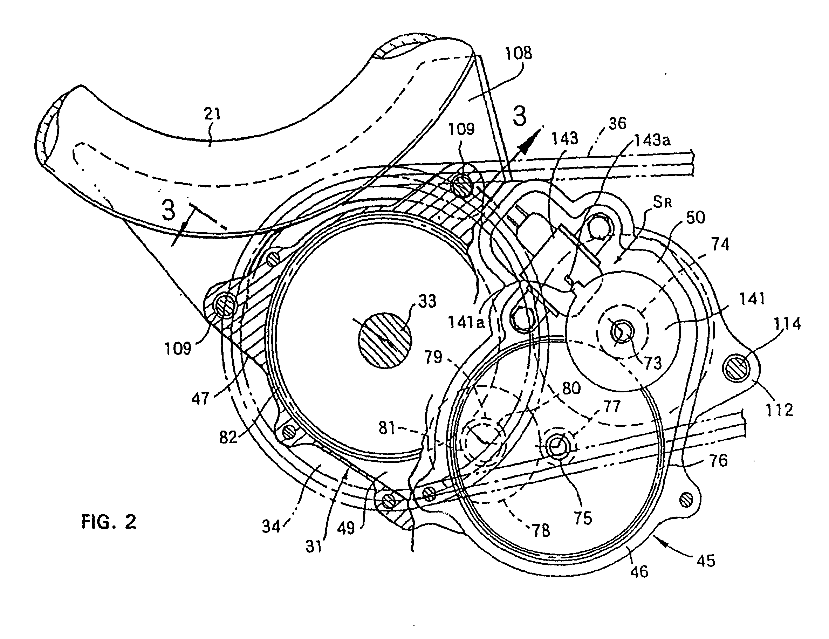

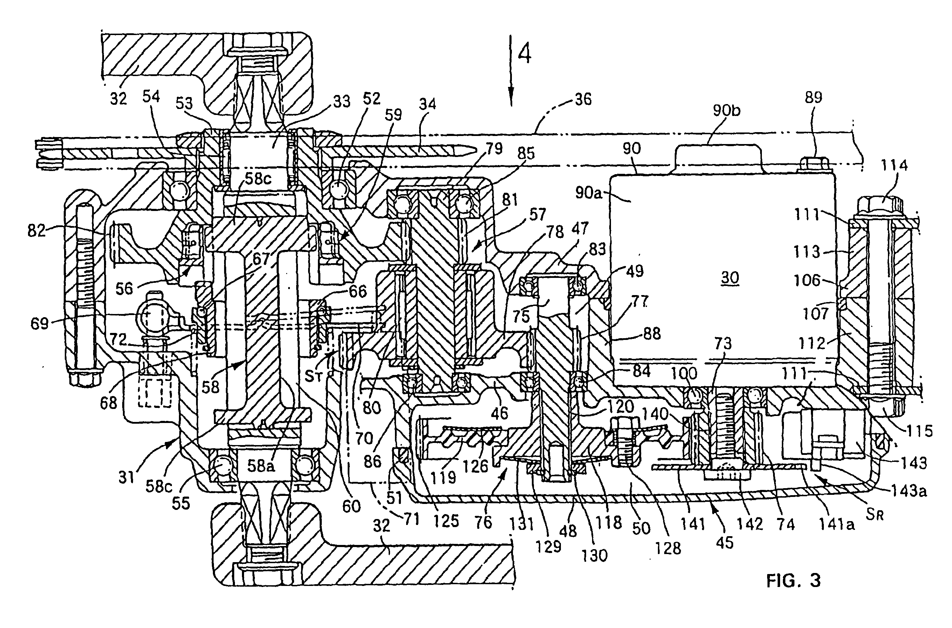

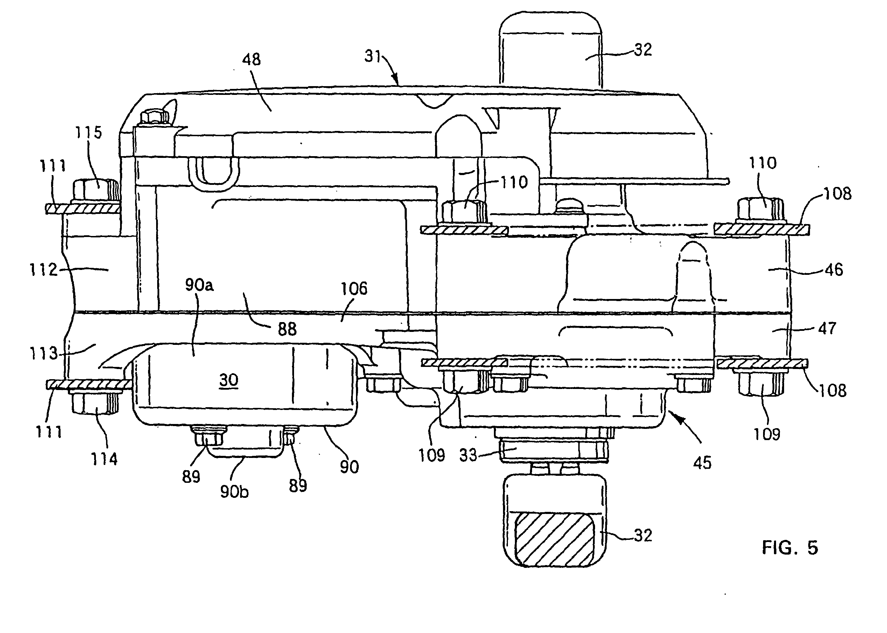

Referring to Figs. 2 to 5, the casing 45 of the power unit 31 is composed of a left casing half 46 as a first case member, a right casing half 47 as a second case member, and a cover 48 as a case member. The right casing half 47 is joined to the left casing half 46 with a first containing chamber 49 put therebetween. The cover 48 is joined to the left casing half 46 with a second containing chamber 50 put therebetween. A rubber made gasket 51 is mounted on a connection surface of the cover 48 with the left casing half 46.

The crank shaft 33 is rotatably supported by the casing 45 while being mostly disposed in the first containing chamber 49. A right end portion of the crank shaft 33 is supported through a roller bearing 54 by an inner periphery of a rotating cylinder 53 as a power transmitting member supported by the right casing half 47 through a ball bearing 52. A left end portion of the crank shaft 33 is supported by the left casing half 46 through a ball bearing 55. A drive sprocket 34 disposed on the right side of the right casing half 47 is joined to the rotating cylinder 53.

A step-on force of the crank pedals 32 mounted at the right and left ends of the crank shaft 33 is transmitted from the crank shaft 33 to the drive sprocket 34 through a power transmission means 56. An output of the motor 30 mounted to the casing 45 is transmitted to the drive sprocket 34 through a reduction gear train 57 for assisting the step-on force of the crank pedals 32.

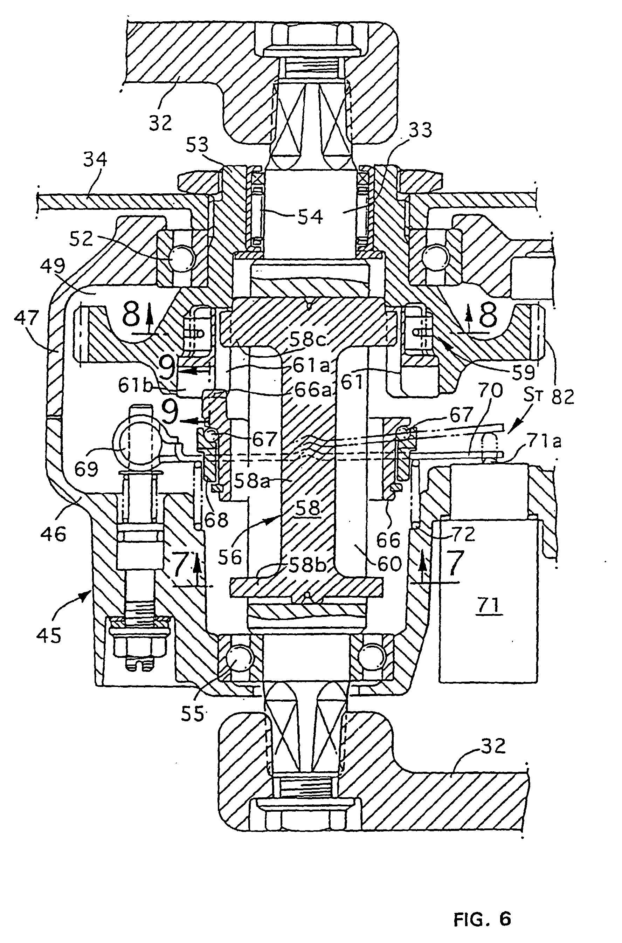

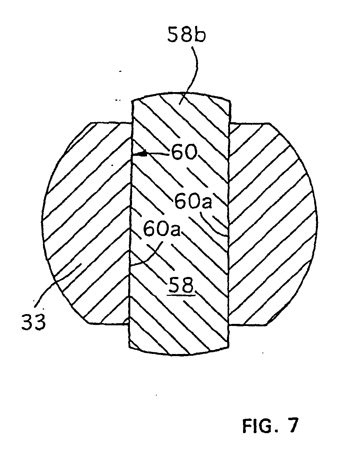

Referring additionally to Figs. 6 to 8, the power transmission means 56 for transmitting a power of the crank shaft 33 to the drive sprocket 34 is disposed in the first containing chamber 49. The power transmission means 56 is composed of a torsion bar 58 connected to the crank shaft 33 and a first one-way clutch 59 disposed between the rotating cylinder 53 and the torsion bar 58.

The crank shaft 33 has a slit 60 extending along its axial line, and the torsion bar 58 is mounted in the slit 60. The torsion bar 58 has a columnar shaft portion 58a, an arm portion 58b, and an arm portion 58c. The shaft portion 58a is rotatably fitted between right and left inner wall surfaces 60a and 60b of the slit 60. The arm portion 58b projects from a left end (lower end in Fig. 6) of the shaft portion 58 to both sides thereof. The arm 58c projects from a right end (upper end in Fig. 6) of the shaft portion 58a to both sides thereof.

The one arm portion 58b of the torsion bar 58 is integrally connected to the crank shaft 33 in such a manner as to be tightly fitted in the right and left inner wall surfaces 60a and 60b of the slit 60. The other arm portion 58c of the torsion bar 58 is loosely fitted in the slit 60 with gaps α put between the right and left inner wall surfaces 60a and 60b and the arm portion 58c. The shaft portion 58a of the torsion bar 58 is allowed to be torsionally deformed within a range in which the arm portion 58c is loosely moved a distance equivalent to the gaps α.

The first one-way clutch 59 includes a clutch inner ring 61, the rotating cylinder 53, and a plurality of (for example, four pieces of) rachet claws 62. The clutch inner ring 61 coaxially surrounds the crank shaft 33 and is rotatable relative to the crank shaft 33. The rotating cylinder 53, which functions as a clutch outer ring, coaxially surrounds the clutch inner ring 61. The claws 62 are pivotably supported on an outer periphery of the clutch inner ring 61 and are biased by an annular spring 63 in the direction where the claws 62 are opened. Both ends of the arm portion 58c of the torsion bar 58 are fitted in a pair of recessed portions 61a provided in an inner peripheral portion of the clutch inner ring 61, and rachet teeth 64 to be engaged with the rachet claws 62 are formed on an inner periphery of the rotating cylinder 53.

Such a first one-way clutch 59 has the following function. When the crank shaft 33 is normally rotated by stepping-on of the crank pedals 32, a torque of the crank shaft 33 is transmitted to the drive sprocket 34 through the torsion bar 58, first one-way clutch 59, and rotating cylinder 53. Besides, when the crank shaft 33 is reversely rotated by stepping-on of the crank pedals 32, the first one-way clutch 59 slips to allow reverse rotation of the crank shaft 33.

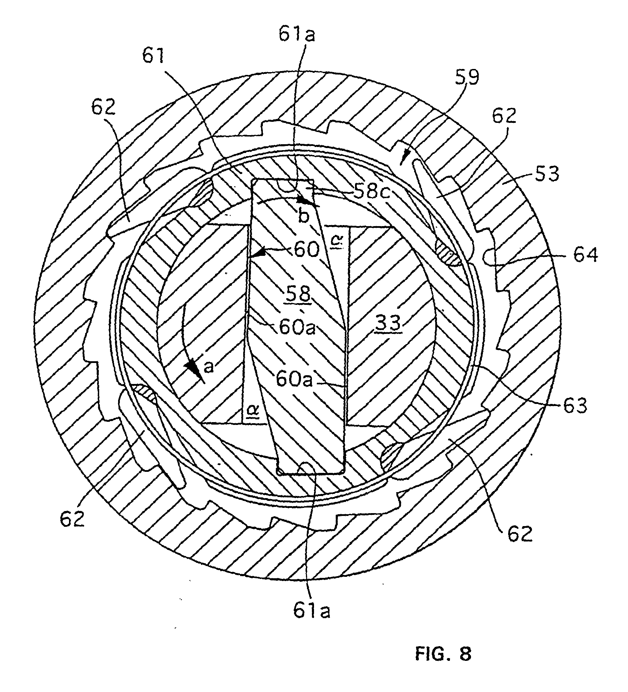

When a torque in the direction shown by an arrow "a" of Fig. 8 is inputted from the crank pedals 32 to the crank shaft 33, the clutch inner ring 61, to which a load of the rear wheel W_{R} is transmitted through the rotating cylinder 53 and rachet claws 62, withstands against the torque in the direction "a", so that the arm portion 58c of the torsion bar 58 is torsionally deformed in the direction shown by an arrow "b" with respect to the crank shaft 33, that is, it is rotated relative to the crank shaft 33. As a result, a relative rotation corresponding to the torque inputted to the crank shaft 33 is generated between the crank shaft 33 and the clutch inner ring 61.

A slider inner 66 is supported on an outer periphery of the crank shaft 33 in such a manner that it cannot be relatively rotated but can be relatively moved in the axial direction. A slider outer 68 is relatively rotatably supported on an outer periphery of the slider inner 66 through a plurality of balls 67.

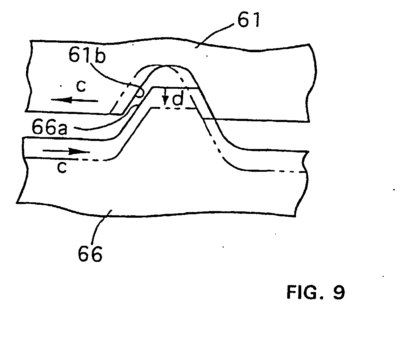

As shown in Fig. 9, a recessed cam face 61b is provided at an end surface of the clutch inner ring 61 of the first one-way clutch 59 on the slider inner 66 side, and a projecting cam face 66a to be engaged with the cam face -61b is provided on the slider inner 66.

A base end portion of a detecting lever 70 is rockably supported on the left casing half 46 through a fulcrum pin 69. An intermediate portion of the detecting lever 70 is brought in contact with the slider outer 68 from the side opposed to the clutch inner ring 61. A stroke sensor 71 constituting a torque detecting means S_{T} in co-operation with the detecting lever 70 is mounted on the left casing half 46. A leading end of the detecting lever 70 is brought in contact with a probe 71a of the stroke sensor 71. A spring 72 is contractedly provided between the detecting lever 71 and the left casing half 46. The detecting lever 71 is brought in elastic-contact with the slider outer 68 by a biasing force of the spring 72, so that the slider outer 68 and the slider inner 66 are biased to the clutch inner ring 61 side.

When the torsion bar 58 is torsionally deformed depending on a torque supplied from the crank pedals 32 to the crank shaft 33, the slider inner 66 is rotated relative to the clutch inner ring 61 in the direction shown by an arrow "c" as shown in Fig. 9 and thereby the cam face 66a of the slider inner 66 is pushed against the cam face 61b of the clutch inner ring 61. As a result, the slider inner 66 is slid against the biasing force of the spring 72 in the axial line of the crank shaft 33, that is, in the direction shown by an arrow "d", so that the detecting lever 70 pushed by the slider outer 68 moved together with the slider inner 66 is rocked around the fulcrum pin 69, and the probe 71a of the stroke sensor 71 is pressed by the detecting lever 70. The stroke of the probe 71a is proportional to the torsional amount of the torsion bar 58, that is, the torque inputted from the crank pedals 32. The input torque is thus detected by the torque detecting means S_{T}.

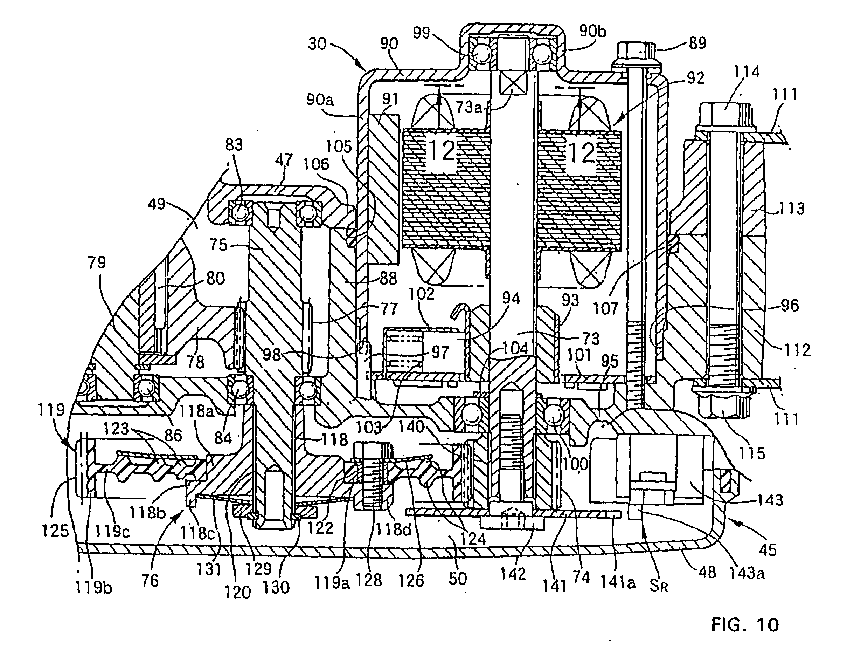

Referring additionally to Fig. 10, the reduction gear train 57 for transmitting a power of the motor 30 to the drive sprocket 34 includes a drive gear 74, a first intermediate gear 76, a second intermediate gear 77, a third intermediate gear 78, a second idle shaft 79, a second one-way clutch 80, a fourth intermediate gear 81, and a driven gear 82. The drive gear 74 is fixed to a rotating shaft 73 of the motor 30 in the second containing chamber 50. The first intermediate gear 76 is fixed on one end of the first idle shaft 75 in the second containing chamber 50 and is meshed with the drive gear 74. The second intermediate gear 77 is integrated with the first idle shaft 75 in the first containing chamber 49. The third intermediate gear 78 is meshed with the second intermediate gear 77. The second idle shaft 79 is provided coaxially with the third intermediate gear 78. The second one-way clutch 80 is provided between the third intermediate gear 78 and the second idle shaft 79. The fourth intermediate gear 81 is integrated with the second idle shaft 79 in the first containing chamber 49. The driven gear 82 is integrated with the rotating cylinder 53 connected to the drive sprocket 34 and is meshed with the fourth intermediate gear 81.

The first idle shaft 75 has an axial line parallel to the rotating shaft 73 of the motor 30. A ball bearing 83 is interposed between the right casing half 47 and the first idle shaft 75, and a ball bearing 84 is interposed between the left casing half 46 and the first idle shaft 75. The second idle shaft 79 has an axial line parallel to the first idle shaft 75. A ball bearing 85 is interposed between the right casing half 47 and the second idle shaft 79, and a ball bearing 86 is interposed between the left casing half 46 and the second idle shaft 79.

The reduction gear train 57 having the above configuration reduces a torque generated by operation of the motor 30 and transmits the reduced torque to the drive sprocket 34. when the operation of the motor 30 is stopped, the second one-way clutch 80 acts to allow idling of the second idle shaft 79, so that the rotation of the drive sprocket 34 due to a step-on force of the crank pedals 32 is not affected by stoppage of the motor 30.

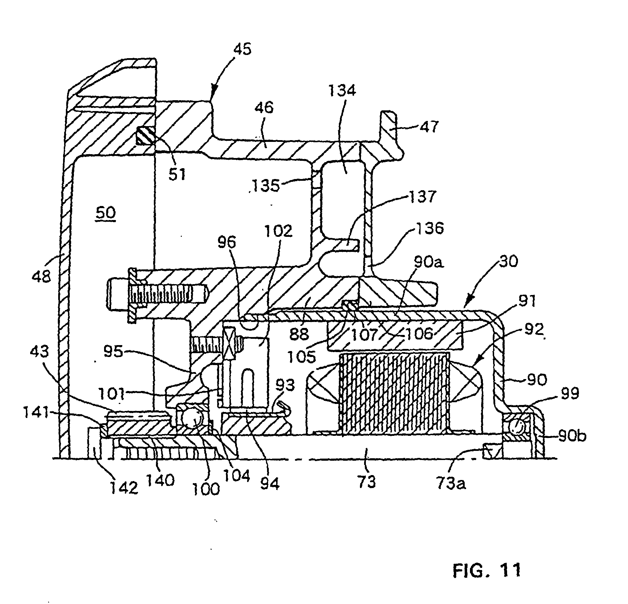

Referring additionally to Fig. 11, a fitting cylinder portion 88 projecting on the opposed side to the cover 48 is integrally provided on the left casing half 46 of the casing 45. A housing 90 of the motor 30 is fastened to the left casing half 46 with a plurality (for example, two pieces) of bolts 89 in a state being fitted in the fitting cylinder portion 88.

In the motor 30 mounted in the casing 45, the axial line of the motor shaft 73 is parallel to the crank shaft 33 and the axial length of the motor shaft 73 is shorter than the axial length of the crank shaft 33. The motor 30 includes the bottoming cylinder-shaped housing 90 formed of a cylindrical yoke 90a with one end closed, a plurality of magnets 91 fixed on the inner surface of the yoke 90a, a rotor 92 coaxially disposed in the housing 90 and having the motor shaft 73, a commutator 93 provided on the rotating shaft 73 on the other end side (opened side) of the yoke 90a, and a plurality of brushes 94 in sliding-contact with the commutator 93.

A supporting wall portion 95 facing the opening portion at the other end of the housing 90 of the motor 30 is integrally provided in the left casing half 46 in such a manner as to close the inner end of the fitting cylinder portion 88. The opening end portion of the housing 90 is fitted by spigot joint in a fitting recess 96 provided in the inner surface of a portion near the inner end of the fitting cylinder portion 88. A positioning pin 97 is planted on the supporting wall portion 95, and a cutout 98 to be engaged with the positioning pin 97 is formed in the opening end portion of the housing 90. Thus, the housing 90 is fitted in the fitting cylinder portion 88 while being certainly positioned in both the radial and circumferential directions, and in such a state, the bolts 89 with locking heads thereof engaged with the closed portion on one end side of the housing 90 are screwed in the supporting wall portion 95.

One end of the motor shaft 73 is rotatably supported through a ball bearing 99 as a first bearing in a bearing housing 90b which projects outward from a central portion of the closed portion on one end side of the housing 90. The other end of the motor shaft 73 rotatably passes through the supporting wall portion 95 and projects on the second containing chamber 50 side. A ball bearing 100 as a second bearing allowing communication of air between the housing 90 and the second containing chamber 50 is interposed between the supporting wall portion 50 and an intermediate portion of the motor shaft 73. Concretely, the ball bearing 100 is press-fitted in the supporting wall portion 95. A snap ring 104 for restricting movement of the inner ring of the ball bearing 100 on the commutator 93 side is mounted around the motor shaft 73.

A supporting plate 101 is fixed to the supporting wall portion 95. A plurality of brush holders 102, on which the brushes 94 are slidably held, are provided on the supporting plate 101. The brushes 94 are biased in the direction where they are brought in sliding-contact with the commutator 93 by springs 103 provided between the brush holders 102 and the brushes 94. In this way, since the brush holders 102, brushes 94, ball bearing 100 and the like are directly supported by the left casing half 46 without use of any motor bracket or the like, it is possible not only to reduce the number of parts but also to further miniaturize the motor 30 in the direction in parallel to the axial line of the crank shaft 33.

An annular recess 105 is steppedly provided in an inner peripheral edge of the leading end of the fitting cylinder portion 88. An annular portion 106, which surrounds the housing 90 of the motor 30 and is joined to the leading end of the fitting cylinder portion 88, is provided on the right casing half 47. An O-ring 107 as an annular seal member, which is brought in close-contact with an outer periphery of the yoke 90a of the housing 90, is held between the annular recess 105 provided in the inner peripheral edge of the leading end of the fitting cylinder portion 88 and the annular portion 106.

Incidentally, the casing 45 is supported by the body frame 21 in a state that the height (from the ground) of the axial line of the crank shaft 33 is nearly equal to the height of the rotating axial line of the motor 30 disposed behind the crank shaft 33. Front portions of the right and left casing halvers 47 and 46 are co-fastened through a pair of bolts 109 and a pair of nuts 110 to brackets 108 fixed on right and left sides of the lower portion of the body frame 21. Brackets 111 are fixed on front portions of the pair of the right and left rear forked portions 25. On the rear side of the casing 45, the left casing half 46 is integrally provided with a hanger portion 112 raised outward from the fitting cylinder portion 88, and the right casing half 47 is provided with a hanger portion 113 integrally connected to the annular portion 106 and held together with the hanger portion 112 between the brackets 111. Thus, both the hanger portions 112 and 113 are supported between the brackets 111 with a bolt 114 and a nut 115.

The drive gear 74 is mounted through a spline 140 to the other end portion of the motor shaft 73 projecting from the supporting wall portion-95 into the second containing chamber 50. The inner ring of the ball bearing 100 having the outer ring press-fitted in the supporting wall portion 95, is fixed by the snap ring 104. A bolt 142 coaxial with the motor shaft 73 is screwed in the other end portion of the motor shaft 73 in a state that the drive gear 74 and a reluctor 141 are held between the inner ring of the ball bearing 100 and the bolt 142, so that the movement of the drive gear 74 along the axial line of the motor shaft 73 is prevented. The drive gear 74 is thus fixed to the motor shaft 73.

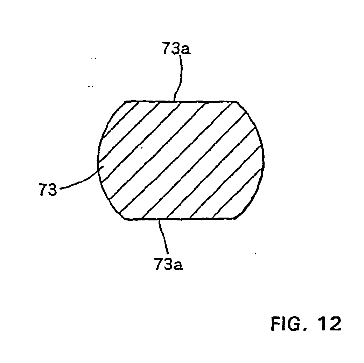

Further, to prevent rotation of the motor shaft 73 by engagement of a tool such as a spanner therewith when the bolt 142 is screwed in and fastened to the motor shaft 73, an outer surface of the motor shaft 73 on one end side, that is, on the ball bearing 99 side is partially cut off to form a pair of flat engagement planes 73a parallel to each other, as shown in Fig. 12.

The reluctor 141 and an electromagnetic pick-up coil type sensor 143 form a rotational speed detecting means S_{R}. A projecting portion 141a is provided around an outer periphery of the reluctor 141, and the sensor 143 is fixed on the left casing half 46 of the casing 45. The sensor 143 has a detecting portion 143a capable of being close to or apart from the projecting portion 141a.

An outer peripheral portion, that is, a meshing portion of the first intermediate gear 76 to be meshed with the drive gear 74, is made from a synthetic resin. That is, the first intermediate gear 76 is configured that a synthetic resin made ring body 119 having teeth 125 extending along its outer periphery is fastened to a metal boss 118 connected to the first idle shaft 75.

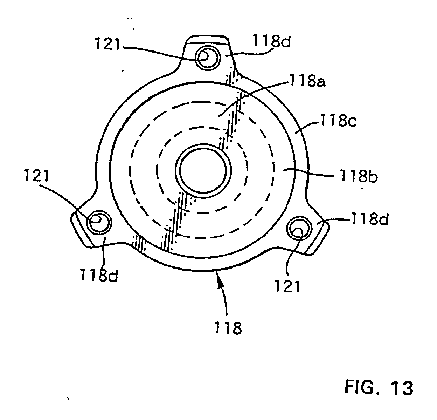

Referring additionally to Fig. 13, the boss 118 is mounted around the first idle shaft 75 through the spline 120, with one end thereof in contact with the inner ring of the ball bearing 84 provided around the first idle shaft 75. At this time, relative rotation around the axial line of the boss 118 is prevented by the presence of the spline 120. A flange portion 118a projecting radially outward is integrally provided on the other end of the boss 118. An annular mounting plate portion 118b, which is stepped from the outer periphery of the flange portion 118a and faces one end side of the boss 118, projects radially outward from the flange portion 118a at the same level as that of the end surface of the flange portion 118a. A cylinder portion 118c extending on the other end side of the boss 118 is formed integrally with the outer periphery of the mounting plate portion 118b. Fastening portions 118d, spaced at equal intervals of, for example, 120° in the circumferential direction of the cylinder portion 118c, project outward from the cylinder portion 118c at the same level as that of the above surface of the mounting plate portion 118b facing the one end side of the boss 118 in the axial direction. Each of the fastening portions 118d has a threaded hole 121.

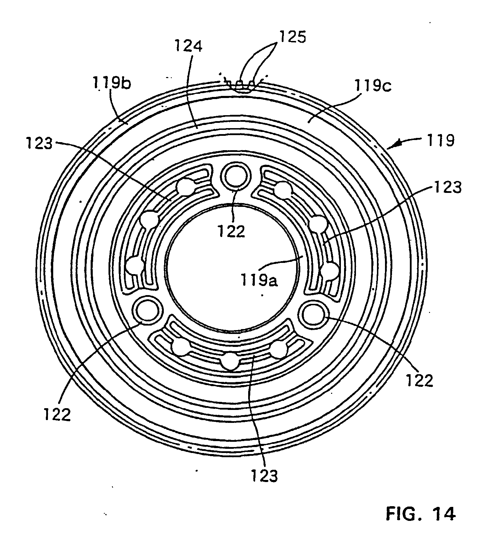

Referring additionally to Fig. 14, the ring body 119 includes a supporting portion 119a formed of a ring-plate, a cylinder portion 119b, and a connecting plate portion 119c. The supporting portion 119a has an inside diameter portion in which the flange portion 118a of the boss 118 is fitted, and an outside diameter portion corresponding to a virtual circle connecting outer edges of the fastening portions 118d of the boss 118 to each other. The cylinder portion 119b coaxially surrounds the supporting portion 119a. The connecting plate portion 119c circumferentially connects the supporting portion 119a to the cylinder portion 119b. Metal made cylindrical fastening collars 122 corresponding to the threaded holes 121 of the boss 118 are integrally buried in the supporting portion 119a. A plurality of ribs 123 are projectingly provided on each of front and back surfaces of the supporting portions 119a in areas between the fastening collars 122. Circular ribs 124 coaxial with the cylindrical portion 119b are projectingly provided on each of front and back surfaces of the connecting plate portion 119c. Further, the plurality of the teeth, typically helical teeth 125 to be meshed with the drive gear 74 are formed on an outer periphery of the cylindrical portion 119b.

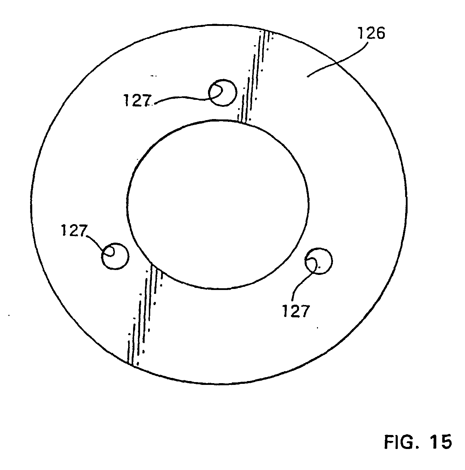

The supporting portion 119a of the ring body 119 is brought in contact with the mounting plate portion 118b of the boss 118 from the one end side of the boss 118 in the axial direction. A metal reinforcing plate 126 is brought in contact with the ring body 119 on the opposed side to the mounting plate portion 118b. As shown in Fig. 15, the reinforcing plate 126 is formed in a ring shape and has through-holes 127 corresponding to the fastening collars 122. Bolts 128 passing through the through-holes 127 and the fastening collars 122 are screwed in the threaded holes 121 of the boss 128, to form the first intermediate gear 76. As a result, the synthetic resin made ring body 119, when fastened to the boss 118, is prevented from being applied with a fastening force.

Such a first intermediate gear 76 is fixed to the first idle shaft 75 by mounting the boss 118 of the first intermediate gear 76 around the first idle shaft 75 in such a manner as to be impossible in relative rotation through the spline 120, and bringing the one end of the first intermediate gear 76, that is, the one end of the boss 118 with the inner ring of the ball bearing 84. A ring-like receiving member 129 facing the other end of the first intermediate gear 76 is removably mounted around the first idle shaft 75. Specifically, a snap ring 130 is mounted around an outer surface of the end portion of the first idle shaft 75, and the receiving member 129 is mounted around the first idle shaft 75 in such a manner that the first idle shaft 74 is prevented from being moved in the direction being separated from the first intermediate gear 76 by the snap ring 130. A coned disc spring 131 is provided between the first intermediate gear 76 and the receiving member 129. An end portion of the coned disc spring 131 on the first intermediate gear 76 side is brought in contact with the flange portion 118a of the boss 118 while being restricted from being extended in diameter radially outward from the cylinder portion 118c of the boss 118. The first intermediate gear 76 is pressed onto the inner ring side of the ball bearing 84 by a spring force of the coned disc spring 131. The first intermediate gear 76 in the state that the relative rotation around the axial line is prevented by the spline 120 is thus pressed against the inner ring of the ball bearing 84, and thereby it is fixed to the first idle shaft 75.

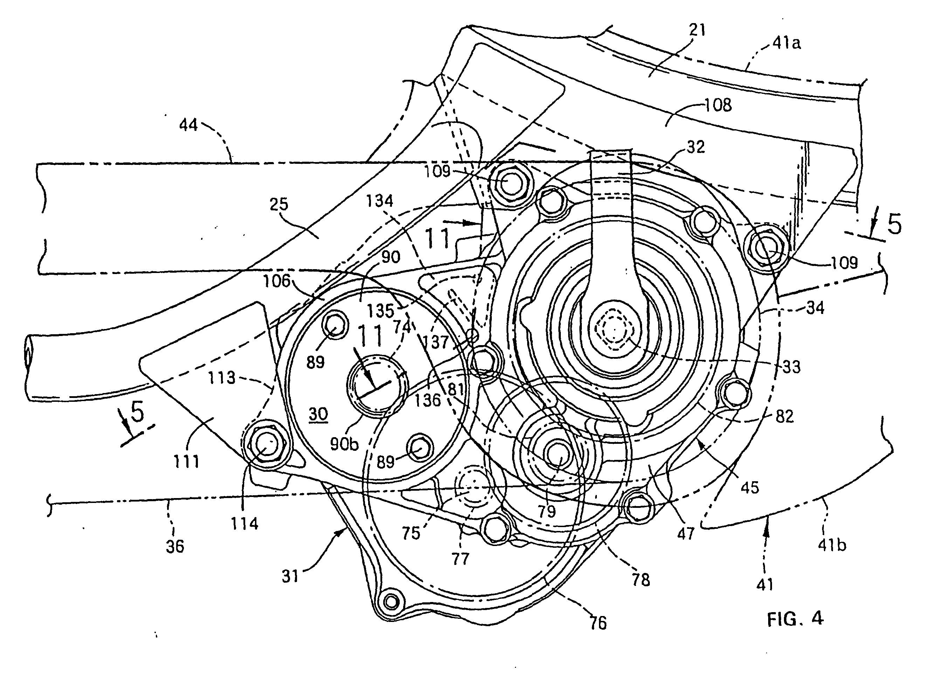

As shown in Figs. 2 and 4, the first and second idle shafts 75 and 79 of the reduction gear train 57 are disposed lower than a straight line connecting the axial line of the crank shaft 33 to the rotational axial line of the motor 30, and also the first idle shaft 75 is disposed lower than the second idle shaft 79. And, over these idle shafts 75 and 79, is formed a breather chamber 134 in an upper portion of the casing 45 between the crank shaft 33 and the motor 30.

Referring particularly to Fig. 11, the breather chamber 134 is formed between the left casing half 46 and the right casing half 47. A through-hole 135 communicating an upper portion of the breather chamber 134 to the second containing chamber 50 is provided in the left casing half 46. Accordingly, since the interior of the motor 30 is communicated to the second containing chamber 50 through the ball bearing 100 provided between the supporting wall portion 95 and the motor shaft 73, it is communicated to the upper portion of the breather chamber 134. A breather hole 136 communicating a lower portion of the breather chamber 134 to the exterior is provided in the right casing half 47. Further, a wall 137 close to the right casing half 47 is integrally formed on the left casing half 46 in such a manner as to form a labyrinth between the through-hole 135 and the breather hole 136.

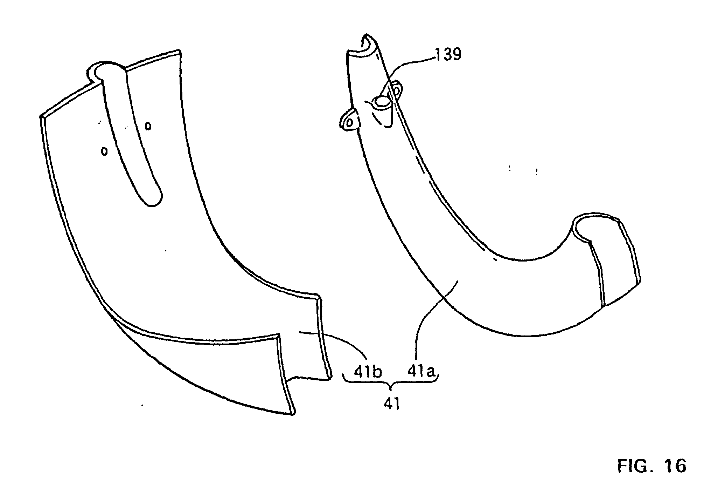

As shown in Fig. 16, the cover 41 for covering most of the body frame 21 includes an upper cover 41a covering the body frame 21 from top and a lower cover 41b covering the body frame 21 from bottom, wherein the upper and lower covers 41a and 41b are connected to each other. An opening portion 139, through which the main switch 42 is exposed, is provided in an upper portion of the upper cover 41a.

The function of this embodiment will be described below. When the crank pedals 32 are operated by a rider for running the motor-assisted bicycle, a power of the crank shaft 33 is transmitted to the drive sprocket 34 through the power transmission means 56, and further it is transmitted to the rear wheel W_{R} through the chain 36 and the driven sprocket 35.

An input torque generated by the crank pedals 32 is detected by the torque detecting means S_{T}. Further, a rotational speed of the motor 30, which is representative of the bicycle speed, is detected by the rotational speed detecting means S_{R}. And, an assisting power is generated by the motor 30 on the basis of the detected values of both the detecting means S_{T}, S_{R}, thereby reducing the load of the rider.

In the power unit 31 of such a motor-assisted bicycle, since the first intermediate gear 76, which is one of the plurality of gears 74, 76, 77, 78, 81 and 82 constituting the reduction gear train 57 provided between the motor 30 and the rotating cylinder 53, has the outer peripheral portion made from a synthetic resin, it is possible to suppress occurrence of gear noise at the meshing portion between the first intermediate gear 76 and the drive gear 74. Accordingly, if the motor 30 of a high speed type is used because the axial length of the motor shaft 73 parallel to the axial line of the crank shaft 33 is required to be shorter than the axial length of the crank shaft 33, it is possible to suppress occurrence of gear noise at the reduction gear train 57 as mush as possible. Further, in this case, there can be suppressed occurrence of gear noise of the meshing portion of the first intermediate gear 76 which is meshed with the drive gear 74 fixed to the motor shaft 73 of the motor 30 and which is thereby highest in rotational speed among the gears of the reduction gear train 57, so that it is possible to effectively enhance the gear noise suppressing effect.

Since the first intermediate gear 76 is so configured that the synthetic resin made ring body 119 having on its outer periphery the plurality of the teeth 125 is fastened to the metal boss 118 connected to the first idle shaft 75, the teeth 125 requiring a high forming accuracy can be molded from a synthetic resin. As a result, it is possible to increase the accuracy of the teeth 125. In addition, since the load for fixing the first intermediate gear 76 to the first idle shaft 75 is not applied to the synthetic resin ring body 119 which is relatively weak in strength, the first intermediate gear 76 can be positively connected to the first idle shaft 75 by increasing the fixing load.

Further, the first intermediate gear 76 is fixed to the first idle shaft 75 by mounting the first intermediate gear 76 around the first idle shaft 75 in such a manner as to be impossible in relative rotation around the axial line and to be brought in contact at its one end with the inner ring of the ball bearing 84 and interposing the coned disc spring 131 between the other end of the first intermediate gear 76 and the receiving member 129 fixed by the snap ring 130. Accordingly, when the first intermediate gear 76 meshed with the drive gear 74 is fixed to the first idle shaft 75, it is not applied with a rotational torque. As a result, the intermediate gear 76 can be fixed to the first idle shaft 75 in a state that the ring body 119 made from a synthetic resin relatively weak in strength and meshed with the drive gear 74 is prevented from being applied with a rotational torque around the axial line.

Incidentally, the drive gear 74 is mounted to the motor shaft 73 by the bolt 107 coaxial with the motor shaft 73 in a state that prior to mounting of the housing 90 of the motor 30 in the casing 45, the rotation of the motor shaft 73 is prevented by engaging a tool such as a spanner with both the engagement planes 73a of the motor shaft 73 having passed through the supporting wall portion 95 through the ball bearing 100. Accordingly, if the drive gear 74 is fastened to the motor shaft 73 in a state being meshed with the first intermediate gear 76, the first intermediate gear 76 is not applied with a rotational torque, with a result that it is possible to protect the first intermediate gear 76 having the synthetic resin made meshing portion which is meshed with the drive gear 74.

The housing 90 of the motor 30 is fitted in the fitting cylinder portion 88 provided on the left casing half 46 and is fastened to the left casing half 46 with the pair of the bolts 89. The annular portion 106 is joined to the leading end of the fitting cylinder portion 88 while putting the O-ring 107, in close-contact with the outer periphery of the housing 90, between the annular recess 105 steppedly provided in the inner peripheral edge of the leading end of the fitting cylinder portion 88 and the annular portion 106. The annular portion 106 is provided on the right casing half 47 connected to the left casing half 46 in such a manner as to surround the housing 90. As a result, the housing 90 of the motor 30 is mounted in the casing 45 while partially projecting from the right casing half 47, so that the casing 45 is not required to provide a portion for covering the whole of the motor 30. Thus, it is possible to mount the housing 90 of the motor 30 in the casing 45 while keeping a good sealing performance between the casing 45 and the same, and hence to reduce the size and the weight of the casing 45.

Further, the annular recess 105 is provided in the inner peripheral edge of the leading end of the fitting cylinder portion 88, and consequently, if the left casing half 46 is produced by casting, the annular recess 105 can be formed simultaneously with casting of the left casing half 46. This eliminates a cutting work for the annular recess 105, to thereby reduce the number of the machining steps.

The housing 90 of the motor 30 may be mounted in the casing 45 by a procedure of fitting the housing 90 in the fitting cylinder portion 88 in a state that the O-ring 107 is not mounted in the annular recess 105, before the right and left casing halves 47 and 46 are joined to each other, and then mounting the O-ring 107 in the annular recess 105, and joining the right and left casing halves 47 and 46 to each other. This procedure is advantageous, in comparison with a procedure of fitting the housing 90 in the fitting cylinder portion 88 after mounting the O-ring 107 in the annular recess 105, in preventing the O-ring 107 from being damaged and also reducing a friction resistance generated upon fitting of the housing 90 resulting in the improved workability.

Further, since the hanger portion 113 for supporting the casing 45 on the rear forked portions 25 of the body frame 21 in co-operation with the hanger portion 112 provided on the left casing half 46, is integrally provided on the annular portion 106 provided on the right casing half 47, it is possible to eliminate the necessity of provision of any special part for supporting the casing 21 to the body frame 21 and hence to reduce the number of parts.

Incidentally, the interior of the motor 30 is communicated to the second containing chamber 50 of the casing 45 through the ball bearing 100 and the breather chamber 134 is formed in the upper portion of the casing 45 between the right and left casing halves 47 and 46 wherein the through-hole 135 communicating the upper portion of the breather chamber 134 to the second containing chamber 50 is provided in the left casing half 46 and the breather hole 136 communicating the lower portion of the breather chamber 134 to the exterior is provided in the right casing half 47. Accordingly, the air in the housing 90 of the motor 30 can be breathed through the breather chamber 134 and the breather hole 136 correspondingly to expansion/contraction of the air due to repeating of heat generation when the motor 30 is in use and cooling when the motor 30 is not in use, so that the pressure in the interior of the housing 90 of the motor 30 is not increased or reduced. Hence, the seal structure between the housing 90 of the motor 30 and the casing 45 can be simplified only by bringing the O-ring 107 held between both the casing halves 46 and 47 in close-contact with the outer surface of the housing 90. Further, since the breather hole 136 is provided in the lower portion of the breather chamber 134 disposed in the upper portion of the casing 45 and the upper portion of the breather chamber 134 is communicated to the interior of the motor 30, it is possible to prevent permeation of water from the breather chamber 134 into the casing 45 and the interior of the motor 30, and to positively discharge water having permeated in the breather chamber 134.

Since the breather chamber 134, which is formed in the upper portion of the casing 45 between the crank shaft 33 and the motor 30, is located at a relatively high position from the ground, it is possible to prevent permeation of water into the breather chamber 134 as far as possible. Further, since the first and second idle shafts 75 and 79 as the components of the reduction gear train 57 are rotatably supported by the casing 45 at the positions lower than the straight line connecting the axial line of the crank shaft 33 to the rotational axial line of the motor 30, the reduction gear train 57 can be configured in such a manner that the motor 30 is close to the crank shaft 33, and also the breather chamber 134 can be formed by effectively utilizing a space between the crank shaft 33 and the motor 30. Thus, it is possible to make compact the power unit 31.

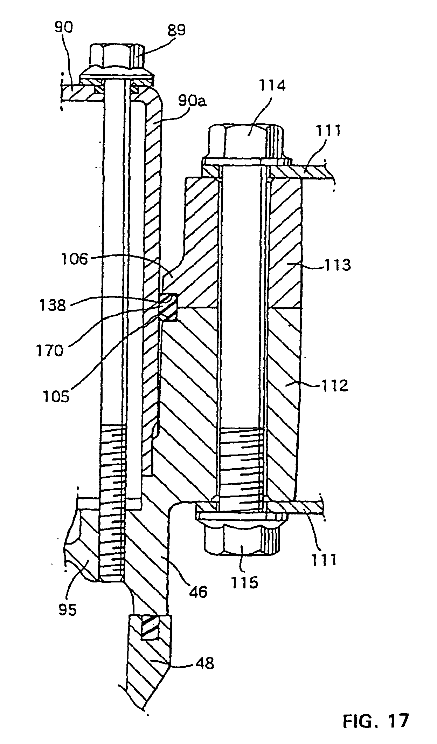

Fig. 17 shows a modification of the seal structure of the housing of the motor. As shown in this figure, an annular recess 138 for holding the O-ring 107 in co-operation of the annular recess 105 provided in the inner peripheral edge of the leading edge of the fitting cylinder portion 88, may be provided in the annular portion 106 provided on the right casing half 47 to be joined to the leading end of the fitting housing 88.

## Claims

1. A power unit for a motor-assisted bicycle comprising:
a casing (45) adapted to be supported by a body frame (21) while rotatably supporting a crank shaft (33) having at both ends thereof crank pedals (32);
a power transmitting member (53) enabling transmission of a rotational power from said crank shaft (33), said member (53) being rotatably supported by said casing (45) and adapted to be interlocked with a rear wheel (W_{R});
an electrically assisting motor (30) having a rotational axial line parallel to said crank shaft (33) and mounted in said casing (45); and
a reduction gear train (57) provided between said motor (30) and said power transmitting member (53) ;
wherein a breather chamber (134) communicated to the interior of said motor (30) is formed in an upper portion of said casing (45), and a breather hole (136), provided an the side of the power transmission member (53), communicating the interior of said breather chamber (134) to the exterior is formed in said casing (45).

2. A power unit for a motor-assisted bicycle according to claims 1, wherein said breather chamber (134) is formed in the upper portion of said casing (45) between said crank shaft (33) and said motor (30).

3. A power unit for a motor-assisted bicycle according to claim 2, wherein idle shafts (75, 79), as components of said reduction gear train (57), having an axial line parallel to said crank shaft (33) are rotatably supported by said casing (45) at positions lower than a straight line connecting an axial line of said crank shaft (33) to a rotational axial line of said motor (30).

4. A power unit for a motor-assisted bicycle according to any one of claims 1 to 3, wherein a through-hole (135) communicating an upper portion of said breather chamber (134) to the interior of said motor (30) and said breather hole (136) communicating a lower portion of said breather chamber (134) to the exterior are formed in said casing (45).

5. A power unit for a motor-assisted bicycle according to any one of claims 1 to 4, wherein said breather hole (136) is provided in the region surrounded by said transmission member (53).

6. A power unit for a motor-assisted bicycle according to any one of claims 1 to 5, wherein said breather chamber (134) is formed by coupling first casing member (46) and second casing member (47).

## Patentansprüche

1. Antriebseinheit für ein motorunterstütztes Fahrrad, umfassend:
ein Gehäuse (25), das dazu ausgelegt ist, an einem Hauptrahmen (21) getragen zu werden, während es eine Kurbelwelle (33) drehbar trägt, die an ihren beiden Enden Kurbelpedale (32) aufweist;
ein Kraftübertragungselement (53), das die Übertragung einer Drehkraft von der Kurbelwelle (33) ermöglicht, wobei das Element (53) an dem Gehäuse (45) drehbar gelagert ist und dazu ausgelegt ist, mit einem Hinterrad (W_{R}) gekoppelt zu werden;
einen elektrischen Hilfsmotor (30), der eine Drehachslinie aufweist, die zu der Kurbelwelle (33) parallel ist, und in dem Gehäuse (45) angebracht ist; und
einen Untersetzungsgetriebezug (57), der zwischen dem Motor (30) und dem Kraftübertragungselement (53) vorgesehen ist;
wobei eine Lüftungskammer (134), die mit der Innenseite des Motors (30) in Verbindung steht, in einem oberen Abschnitt des Gehäuses (45) ausgebildet ist, und ein Lüftungsloch (136), das an der Seite des Kraftübertragungselements (53) vorgesehen ist und die Innenseite der Lüftungskammer (134) mit der Außenseite verbindet, in dem Gehäuse (45) ausgebildet ist.

2. Antriebseinheit für ein motorunterstütztes Fahrrad nach Anspruch 1, worin die Lüftungskammer (134) in dem oberen Abschnitt des Gehäuses (45) zwischen der Kurbelwelle (33) und dem Motor (30) ausgebildet ist.

3. Antriebseinheit für ein motorunterstütztes Fahrrad nach Anspruch 2, worin Zwischenwellen (75, 79) als Komponenten des Untersetzungsgetriebezugs (57), die eine zur Kurbelwelle (33) parallele Achslinie aufweisen, an dem Gehäuse (45) an Positionen drehbar gelagert sind, die tiefer sind als eine gerade Linie, die eine Achslinie der Kurbelwelle (33) mit einer Drehachslinie des Motors (30) verbindet.

4. Antriebseinheit für ein motorunterstütztes Fahrrad nach einem der Ansprüche 1 bis 3, worin ein Durchgangsloch (135), das einen oberen Abschnitt der Lüftungskammer (134) mit der Innenseite des Motors (30) verbindet, und ein Lüftungsloch (136), das einen unteren Abschnitt der Lüftungskammer (134) mit der Außenseite verbindet, in dem Gehäuse (45) ausgebildet sind.

5. Antriebseinheit für ein motorunterstütztes Fahrrad nach einem der Ansprüche 1 bis 4, worin das Lüftungsloch (136) im von dem Übertragungselement (53) umgebenen Bereich vorgesehen ist.

6. Antriebseinheit für ein motorunterstütztes Fahrrad nach einem der Ansprüche 1 bis 5, worin die Lüftungskammer (134) durch Kuppeln eines ersten Gehäuseelements (46) und eines zweiten Gehäuseelements (47) gebildet ist.

## Revendications

1. Groupe moteur destiné à une bicyclette à assistance motorisée, comprenant :
un carter (45) adapté pour être supporté par un cadre (21) tout en supportant de manière rotative une vilebrequin (33) doté de pédales (32) à ses deux extrémités ;
un organe de transmission de puissance (53) permettant la transmission d'une puissance rotative du vilebrequin (33), ledit organe (53) étant supporté en rotation par ledit carter et adapté à engrener avec une roue arrière (W_{R}) ;
un moteur d'assistance électrique (30) ayant une ligne d'axe de rotation parallèle au vilebrequin (33) est monté dans le carter (45) ; et
un train d'engrenage réducteur (57) disposé entre le moteur (30) et l'élément de transmission de puissance (53) ;
dans lequel une chambre de reniflard (134) communiquant avec l'intérieur du moteur (30) est formée dans une portion supérieur du carter (45), et un trou de reniflard (136), établi sur le côté de l'élément de transmission de puissance (53), faisant communiquer l'intérieur de la chambre de reniflard (134) et l'extérieur, est formé dans ledit carter (45).

2. Groupe moteur pour une bicyclette à assistance motorisée selon la revendication 1, dans lequel la chambre de reniflard (134) est formée dans la portion supérieure du carter (45) entre le vilebrequin (33) et le moteur (30).

3. Groupe moteur pour une bicyclette à assistance motorisée selon la revendication 2, dans lequel des arbres fous (75, 79), étant des composants du train d'engrenage réducteur (57), ayant une ligne d'axe parallèle au vilebrequin (33), sont supportés en rotation par le carter (45) à des positions au-dessous d'une ligne droite reliant une ligne d'axe du vilebrequin (33) à une ligne d'axe de rotation du moteur (30).

4. Groupe moteur pour une bicyclette à assistance motorisée selon l'une quelconque des revendications 1 à 3, dans lequel un trou traversant (135) faisant communiquer une portion supérieure de la chambre de reniflard (134) à l'intérieur du moteur (30) et le ledit trou de reniflard (136) faisant communiquer une portion inférieure de la chambre de reniflard (134) et l'extérieur sont formés dans le carter (45).

5. Groupe moteur pour une bicyclette à assistance motorisée selon l'une quelconque des revendications 1 à 4, dans lequel le trou de reniflard (136) est établi dans la région entourée par l'organe de transmission (53).

6. Groupe moteur pour une bicyclette à assistance motorisée selon l'une quelconque des revendications 1 à 5, dans lequel la chambre de reniflard (134) est formée en unissant un premier élément de carter (46) et un second élément de carter (47).
